# EUROPÄISCHE PATENTSCHRIFT

(11) **EP 0 592 354 B1**
(45) Veröffentlichungstag und Bekanntmachung des Hinweises auf die Patenterteilung: **09.07.1997**
(21) Anmeldenummer: 93710015.4
(22) Anmeldetag: 07.09.1993
(51) Int. Cl.: B04B 15/08, B04B 5/04

(54) **Vakuum-Zentrifuge**
Vacuum-centrifuge
Centrifugeuse à vide

(30) Priorität: 07.10.1992 DE 4233753
(43) Veröffentlichungstag der Anmeldung: 13.04.1994
(73) Patentinhaber: Firma Andreas Hettich, D-78532 Tuttlingen (DE)
(72) Erfinder: Eberle, Günter, D-78532 Tuttlingen (DE)
(74) Vertreter: Riebling, Günter, Dr.

(56) Entgegenhaltungen:
- DE-A- 2 364 701
- DE-C- 600 884
- DE-C- 3 805 894
- FR-A- 2 156 519
- GB-A- 2 230 203
- US-A- 4 857 811

## Beschreibung

Gegenstand der Erfindung ist eine Vakuum-Zentrifuge nach dem Oberbegriff des Patentanspruchs 1.

Derartige Vakuum-Zentrifugen sind z. B. durch Fertigungen der Fa. Savant bekannt geworden, bei denen im wesentlichen folgender Aufbau besteht. In einem vakuumdichten Kessel, der von oben über eine entsprechende Dichtung mit einem abnehmbaren Deckel verschließbar ist, rotiert ein Rotor, der eine Reihe von Probenröhrchen trägt, die zentrifugiert werden. Der Kessel wird evakuiert. Um eine Abdichtung des Kessels zu gewährleisten ist es bei der bekannten Ausführung erforderlich, den Rotor mit einem außen liegenden Motor über eine Magnetkupplung magnetisch zu koppeln, um so den Rotor im Kessel drehend anzutreiben.

An der Innenseite des Kessels ist ferner eine Heizung vorhanden. Die Probenröhrchen sind nun mit einer Untersuchungsflüssigkeit und mit einem leicht flüchtigen Lösemittel befüllt, welches Lösemittel im Vakuum verdampft. Bei der Evakuierung des Kessels verdampft während des Zentrifugiervorganges somit das Lösemittel, welches über den Anschluß einer Vakuumpumpe am Kessel aus dem Kessel entfernt werden muß. Damit dieses gefährliche und agressive Lösemittel nicht die Vakuumpumpe beschädigt ist eine Kühlfalle vor der Vakuumpumpe angeordnet.

Eine ähnliche Zentrifuge ist aus der GB-A-2 230 203 bekannt.

Nachteil der bekannten Vakuum-Zentrifuge ist, daß eine relativ aufwendige magnetische Kopplung zwischen dem Rotor und dem außen liegenden Motor erforderlich ist. Weiterer Nachteil ist, daß die im Innenraum des Kessels angeordnete Heizung nur ungenügend und mit geringem Wirkungsgrad die Probenröhrchen beheizen kann, denn die Beheizung kann nur über Infrarotstrahlung erfolgen; eine wärmeleitende Heizung durch einen entsprechenden Luftschleier fehlt. Daher ist die Heizung relativ träge.

Weiterer Nachteil ist der relativ aufwendige Aufbau der gesamten Anordnung, weil in dem Kessel das Lager für den Rotor in besonderer Weise ausgebildet sein muß und der Deckel den gesamten Kessel vakuumdicht abdecken muß.

Der Erfindung liegt deshalb die Aufgabe zugrunde, eine Vakuum-Zentrifuge der eingangs genannten Art so weiterzubilden, daß bei wesentlich geringerem Herstellungsaufwand ein betriebssicherer Betrieb der Vakuum-Zentrifuge gewährleistet ist.

Zur Lösung der gestellten Aufgabe ist die Erfindung durch die technische Lehre des Anspruchs 1 gekennzeichnet.

Wesentliches Merkmal der Erfindung ist, daß lediglich der Rotor an seiner Oberseite vakuumdicht mit einem Deckel verbunden ist, welcher Deckel in Verbindung mit der Rotorwandung einen innen liegenden Raum definiert, in den die Öffnungen der Probenröhrchen münden, und daß ferner die Durchführung der Probenröhrchen durch den Rotor nach außen ebenfalls vakuumdicht abgedichtet ist.

Mit der gegebenen technischen Lehre wird der wesentliche Vorteil erreicht, daß nun der Rotor über eine herkömmliche, relativ kostengünstige mechanische Kupplung mit dem Motor direkt gekoppelt werden kann; es kann also auf eine magnetische Kupplung verzichtet werden. Weiterer Vorteil ist, daß nun nicht mehr der gesamte Kessel evakuiert werden muß, sondern daß nur noch ein geringer Teil (nämlich der obere Teil des Rotors) evakuiert wird. Damit kann das Vakuum wesentlich wirtschaftlicher hergestellt werden und die Vakuumpumpen brauchen keine so hohe Leistung aufzuweisen.

Ein weiterer wesentlicher Vorteil der Erfindung ist, daß die an der Innenseite des Kessels angeordnete Heizung nun mit gutem Wirkungsgrad und schneller Reaktionszeit die Probenröhrchen beheizen kann. Der Kessel ist erfindungsgemäß nicht mehr evakuiert, sondern es besteht ein üblicher Luftschleier im Kessel, der zu einer schnellen Verteilung der Heizungswärme auf die Probenröhrchen führt.

Außerdem kann die Außenwandung des Rotors, an der nächstliegend die Röhrchen beabstandet sind, schwarz eloxiert werden, um so den Rotor als Wärmestrahlungsquelle auszubilden, welche die Wärme schnell auf die Probenröhrchen überträgt.

Damit ist es nun möglich, mit einer schnell wirksamen Heizung unter Vakuum den Inhalt der Probenröhrchen zu evakuieren und somit die im Innenraum der Probenröhrchen angeordnete Lösemittel-Flüssigkeit schnell zu verdampfen.

Ein weiterer Vorteil der Erfindung liegt darin, daß nun mit einem an sich bekannten Rotationsverteiler die Lösemitteldämpfe aus dem oberen, evakuierten Teil des Rotors leicht entfernt werden können. Hierzu wird der Rotationsverteiler verwendet, der in der Achse des Rotors angeordnet ist und der entsprechende Drehdichtungen aufweist, über welche die gefährlichen Lösemitteldämpfe nach unten axial durch die Rotorachse hinweg abgesaugt werden. Wegen des geringeren Absaugvolumens können daher Vakuumpumpen mit relativ geringer Leistungsfähigkeit verwendet werden, die dementsprechend kostengünstig ausgebildet sind.

Kern der vorliegenden Erfindung ist also, daß die Vakuumkammer im Rotor angeordnet ist und nicht mehr im Kessel. Damit rotiert die Vakuumkammer mit dem Rotor mit, während beim Stand der Technik die Vakuumkammer im Kessel selbst ausgebildet ist und nicht mit rotiert.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert einen Schnitt durch einen Rotor nach der Erfindung,
- Figur 2:: Schnitt durch einen Rotationsverteiler mit Antriebsmotor, der den Rotor nach Figur 1 antreibt.

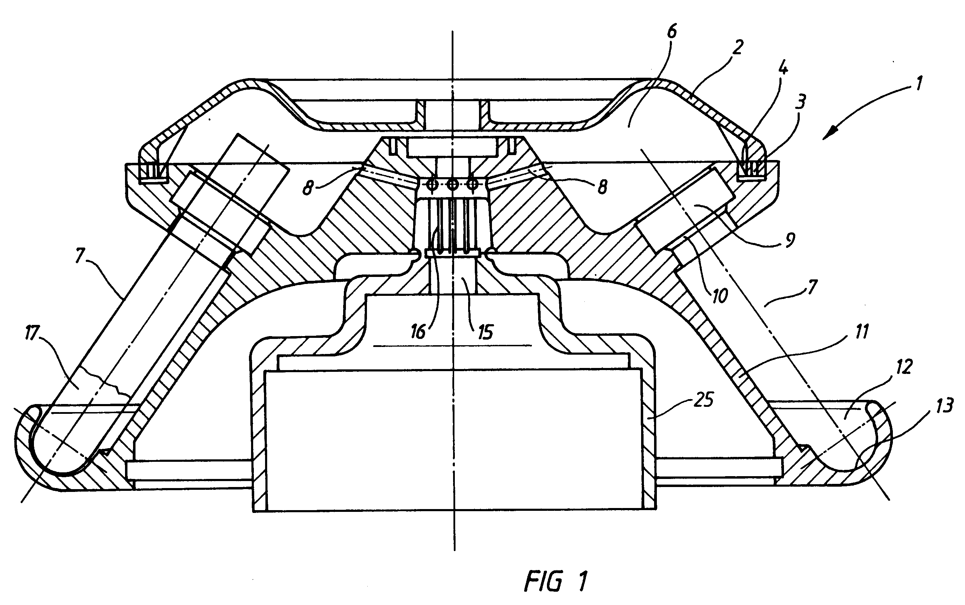

Der Rotor 1 nach Figur 1 besteht aus einem hochfesten Material, welches rotationssymmetrisch ausgebildet ist und welches am Umfang verteilt Aufnahmebohrungen für die Aufnahme von Probenröhrchen 7 aufweist. Die Probenröhrchen 7 sind in gleichmäßigem Abstand am Umfang des Rotors verteilt durch entsprechend abdichtend ausgebildete Hülsen 9 hindurchgesteckt und ruhen mit ihren unteren bodenseitigen Flächen auf einer Standfläche 13 des Rotors, die im Bereich einer umlaufenden Ringnut 12 ausgebildet ist. Der Rotor 1 ist von oben her durch einen Deckel 2 abgedichtet, wobei der Deckel 2 (nicht gezeigt) nach oben noch durch einen Knopf abgeschlossen ist. Der Deckel 2 bildet eine umlaufende Nut 3, in welche eine Ringdichtung eingelegt ist. Diese Ringdichtung greift in eine umlaufende Ringnut 4 im Rotor 1 ein. Durch Einschrauben des Knopfes am Deckel 2 an den Rotor wird somit der Deckel 2 vakuumdicht auf die Oberseite des Rotors 1 aufgeschraubt und abgedichtet. Es bildet sich dann zwischen der Unterseite des Deckels 2 und der Oberseite des Rotors 1 eine Vakuumkammer 6, in welche die Probenröhrchen 7 mit ihren oberen offenen Enden hineinmünden. Jedes Probenröhrchen 7 ist mit einer Probeflüssigkeit 17 gefüllt.

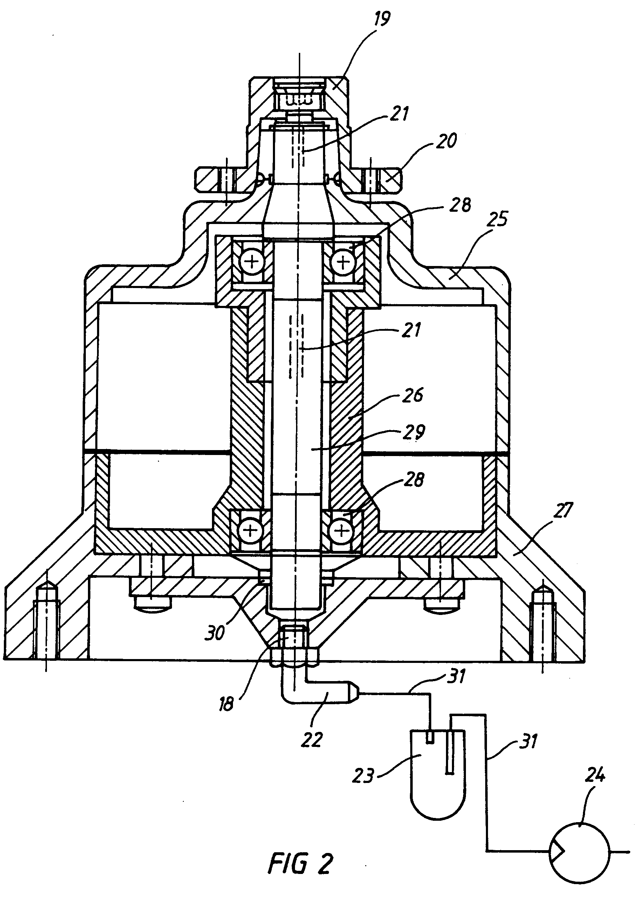

Von der Vakuumkammer 6 münden am Umfang verteilt radial einwärts gerichtete Bohrungen 8 nach innen, und laufen dort in axial gerichtete Bohrungen 16 ein, die in einer zentralen Bohrung 15 münden. In diesem Bereich wird das Anschlußteil 19 des Rotationsverteilers 18 (Figur 2) angeschlossen und abdichtend befestigt.

Der Rotor ist mit einer Motorglocke 25 drehfest verbunden, welche Motorglocke 25 den Rotationsverteiler 18 übergreift.

Wichtig ist, daß die Durchführung der Probenröhrchen 7 durch die Hülsen 9 vakuumdicht ausgeführt ist, in diesem Bereich können noch ein oder mehrere Dichtringe 10 angeordnet sein. Die Probenröhrchen bilden im Ubrigen einen Abstand zu der schräg nach außen geneigt verlaufenden Rotorwand 11.

Der Rotationsverteiler 18 weist im Bereich des mitlaufenden Anschlußteiles 19 einen Ringflansch 20 auf, mit dem dieser an der Innenseite der Motorglocke 25 angeschraubt wird. Die zentrale Bohrung 15 am Rotor, in welcher Vakuum herrscht, wird über eine axiale Bohrung 21 in der mitlaufenden Welle 29 des Rotationsverteilers 18 nach unten geführt. Die Welle 29 läuft in Dichtungen 30, um in diesem Bereich ein Einströmen von Fehlluft zu vermeiden. Die Bohrung 21 in der Welle 29 mündet in einen unten liegenden Krümmer 22, der über eine Leitung mit einem Abscheider 23 verbunden ist, der seinerseits mit einer Vakuumpumpe 24 verbunden ist.

Der Drehantrieb erfolgt dadurch, daß der Motor mit einer Nabe 26 verbunden ist, die in Lagern 28 drehbar gehalten ist. Der Motor ist ferner mit der Motorglocke 25 drehfest verbunden, welche ihrerseits mit dem Ringflansch 20 verbunden ist.

Der untere Teil des Rotationsverteilers ist als feststehendes Gehäuse 27 ausgebildet.

Mit der gegebenen technische Lehre ergibt sich also der wesentliche Vorteil, daß mit einer Vakuumpumpe 24 relativ geringer Leistungsfähigkeit eine Vakuumkammer 6 mit nur geringem Volumen evakuiert werden muß. Außerderm ergibt sich der Vorteil, daß an der Innenseite des (nicht näher dargestellten) Kessels eine wirksame Heizung angebracht werden kann, weil die Probenröhrchen 7 in dem mit Luft gefüllten Innenraum des Kessels laufen und damit ein ständig wirbelnder Luftschleier erzeugt wird, der die Heizungswärme gut auf die Probenröhrchen 7 überträgt.

Außerdem kann die Rotorwand 11 noch als Wärmestrahlungsquelle dadurch ausgebildet sein, daß sie beispielsweise schwarz oder als Spiegelfläche ausgebildet ist.

Weiterer Vorteil sind die geringen Herstellungskosten, denn es kann auf aufwendige Abdichtungen verzichtet werden und insbesondere auf eine magnetische Kupplung zwischen einem Motor und dem vom Motor anzutreibenden Rotor 1.

Es entfällt also somit auch eine aufwendige separate Lagerung des Rotors im Kessel einer Zentrifuge.

Im Stand der Technik werden aufwendige, ölgeschmierte Vakuumpumpen hoher Leistungsfähigkeit verwendet, die das relativ große Volumen im Kessel evakuieren können. Aus diesem Grunde ist beim Stand der Technik die Anordnung von Kühlfallen und Abscheidern erforderlich, um die mit ölgeschmierten Vakuumpumpen vor den agressiven Lösemitteldämpfen zu schützen.

Weil bei der Erfindung aber nur eine kleinbauende und nur eine relativ geringe Leistungsfähigkeit aufweisende Vakuumpumpe benötigt wird, kann auf eine Ölschmierung dieser Vakuumpumpe verzichtet werden und daher kann auch auf aufwendige Abscheider und Kühlfallen im Bereich der Leitung 31 verzichtet werden, weil bei Verwendung einer Vakuumpumpe ohne Öl Schmierung diese von den Lösemitteldämpfen durchströmt werden kann, ohne Schaden zu nehmen.

Nachdem der Kessel und die übrigen Flächen des Rotors unter Atmosphärendruck stehen und mit Luft beaufschlagt sind, ist die Leitfähigkeit der Temperaturübertragung auf den Rotor wesentlich verbessert. Damit ist eine bessere Temperaturregelung der Heizung möglich. Damit ist auch eine Temperaturmessung im Rotor nicht gestört durch Vorhandensein eines Vakuums und ist deshalb einfacher durchzuführen.

### ZEICHNUNGS-LEGENDE

- 1: Rotor
- 2: Deckel
- 3: Nut (Deckel)
- 4: Ringnut (Rotor)
- 6: Vakuumkammer
- 7: Probenröhrchen
- 8: Bohrung
- 9: Hülse
- 10: Dichtring
- 11: Rotorwand
- 12: Ringnut
- 13: Standfläche
- 15: Bohrung
- 16: Bohrung
- 17: Probenflüssigkeit
- 18: Rotationsverteiler
- 19: Anschlußteil
- 20: Ringflansch
- 21: Bohrung
- 22: Krümmer
- 23: Abscheider
- 24: Vakuumpumpe
- 25: Motorglocke
- 26: Nabe
- 27: Gehäuse
- 28: Lager
- 29: Welle
- 30: Dichtung
- 31: Leitung

## Patentansprüche

1. Vakuum-Zentrifuge bestehend aus:
- einer Vakuumkammer (6) mit einem Deckel (2) und einem Unterteil, wobei diese über ein Absaugleitungssystem mit einer Vakuum-Pumpeneinrichtung (24) verbunden ist, um in der Vakuumkammer (6) ein gewünschtes Vakuum zu erzeugen;
- einem Rotor (1), welcher um seine Mittelachse drehbar ist und eine Vielzahl von Probenbehältern (7) trägt, welche zu der Vakuumkammer hin offen sind;
- einem Motor, welcher den Rotor (1) zusammen mit den Probenbehältern in Rotation versetzt; und
- einem stationären Gehäuse (27), auf welchem der Motor und der Rotor montiert sind und an dem eine Heizung befestigt ist,
**dadurch gekennzeichnet**, daß die Vakuumkammer (6) im Rotor (1) angeordnet ist und mittels eines koaxial zur Rotorachse vorgesehenen Ableitungssystems (16;21;22) mit der Vakuum-Pumpeneinrichtung (23;24) verbunden ist.

2. Vakuum-Zentrifuge nach Anspruch 1, **dadurch gekennzeichnet**, daß der Rotor (1) das Unterteil der Vakuumkammer (6) bildet und ein Deckel (2) luftdicht an dem Rotor (1) befestigt ist, um gemeinsam die innenliegende Vakuumkammer (6) zu bilden.

3. Vakuum-Zentrifuge nach Anspruch 2, **dadurch gekennzeichnet**, daß der Deckel (2) mittels einer zentrischen Schraubverbindung an dem Rotor (1) befestigt ist.

4. Vakuum-Zentrifuge nach Anspruch 1, **dadurch gekennzeichnet**, daß der Rotor (1) mechanisch drehfest mit der Motorglocke (25) lösbar gekoppelt ist.

5. Vakuum-Zentrifuge nach Anspruch 4, **dadurch gekennzeichnet**, daß die Rotationsachse des Rotors (1) und die Drehachse der Motorglocke (25) koaxial hintereinander angeordnet sind.

6. Vakuum-Zentrifuge nach Anspruch 4, **dadurch gekennzeichnet**, daß der Rotor (1) und die Motorglocke (25) mittels einer Schraubverbindung miteinander gekoppelt sind.

7. Vakuum-Zentrifuge nach Anspruch 1, **dadurch gekennzeichnet**, daß der Rotor (1) Aufnahmeeinrichtungen für die Probenbehälter (7) aufweist, welche Radialführungen (9) und Achsialführungen (12) umfaßt.

8. Vakuum-Zentrifuge nach Anspruch 7, **dadurch gekennzeichnet**, daß die Radialführungen (9) und die Achsialführungen (12) im Abstand zueinander angeordnet sind, der kleiner als die Länge der Probenbehälter (7) ist.

9. Vakuum-Zentrifuge nach Anspruch 8, **dadurch gekennzeichnet,** daß die Radialführungen (9) in Form von Durchgangsöffnungen ausgebildet sind, in welche die Probenbehälter (7) von der Vakuumkammer (6) nach außen einsetzbar sind, wobei diese Durchgangsöffnungen Dichtmittel (10) aufweisen, welche die Durchgangsöffnungen vakuumdicht gegenüber den Probebehälter-Außenwänden abdichtet.

10. Vakuum-Zentrifuge nach Anspruch 9, **dadurch gekennzeichnet**, daß die Dichtmittel (10) eine Hülse (9) sowie einen Dichtring (10) umfassen.

11. Vakuum-Zentrifuge nach Anspruch 7, **dadurch gekennzeichnet**, daß die Achsialführungen als Ringnut (12) ausgebildet ist, die eine Standfläche (13) für die Probenbehälter (7) umfaßt.

12. Vakuum-Zentrifuge nach Anspruch 1, **dadurch gekennzeichnet**, daß das Absaugleitungssystem im Rotor (1) als axiale Bohrung (16) ausgebildet ist, in die radial gerichtete Bohrungen (8) von der Vakuumkammer (6) aus münden.

13. Vakuum-Zentrifuge nach Anspruch 1, **dadurch gekennzeichnet**, daß die Motorglocke (25) drehfest mit einer Welle (29) verbunden ist, welche als Hohlwelle ausgebildet ist, die in die axiale Bohrung (8) mündet.

14. Vakuum-Zentrifuge nach Anspruch 1, **dadurch gekennzeichnet**. daß der Rotor (1) an seiner Umfangsfläche mindestens im Bereich zwischen den Radialführungen (9) und den Achsialführungen (12) Materialien, welche einen großen Wärmestrahlungskoeffizienten aufweisen vorgesehen sind.

## Claims

1. A vacuum centrifuge comprising:
- a vacuum chamber (6) with a cover (2) and a lower part, in which this is connected via a suction line system with a vacuum pump device (24), in order to produce a desired vacuum in the vacuum chamber (6);
- a rotor (1) which is rotatable about its central axis and carries a plurality of sample containers (7) which are open towards the vacuum chamber;
- a motor which sets the rotor (1) in rotation together with the sample containers; and
- a stationary housing (27) on which the motor and the rotor are mounted and on which a heating arrangement is secured,
characterised in that the vacuum chamber (6) is arranged in the rotor (1) and is connected with the vacuum pump device (23;24) by means of a withdrawal system (16;21;22) provided coaxially to the rotor axis.

2. A vacuum centrifuge according to Claim 1, characterised in that the rotor (1) forms the lower part of the vacuum chamber (6) and a cover (2) is fastened in an air-tight manner on the rotor (1), in order to jointly form the vacuum chamber (6) lying in the inside.

3. A vacuum centrifuge according to Claim 2, characterised in that the cover (2) is fastened to the rotor (1) by means of a central screw connection.

4. A vacuum centrifuge according to Claim 1, characterised in that the rotor (1) is detachably coupled with the motor cap (25) so as to be mechanically resistant to rotation.

5. A vacuum centrifuge according to Claim 4, characterised in that the rotation axis of the rotor (1) and the revolution axis of the motor cap (25) are arranged coaxially one behind the other.

6. A vacuum centrifuge according to Claim 4, characterised in that the rotor (1) and the motor cap (25) are coupled with each other by means of a screw connection.

7. A vacuum centrifuge according to Claim 1, characterised in that the rotor (1) has receiving arrangements for the sample containers (7), which comprise radial guides (9) and axial guides (12).

8. A vacuum centrifuge according to Claim 7, characterised in that the radial guides (9) and the axial guides (12) are arranged at a distance from each other which is smaller than the length of the sample containers (7).

9. A vacuum centrifuge according to Claim 8, characterised in that the radial guides (9) are constructed in the form of through-openings into which the sample containers (7) are able to be inserted from the vacuum chamber (6) outwards, in which these through-openings have sealing means (10) which seal the through-openings in a vacuum-tight manner with respect to the outer walls of the sample containers.

10. A vacuum centrifuge according to Claim 9, characterised in that the sealing means (10) comprise a casing (9) and also a sealing ring (10).

11. A vacuum centrifuge according to Claim 7, characterised in that the axial guides are constructed as an annular groove (12) which comprises a base (13) for the sample containers (7).

12. A vacuum centrifuge according to Claim 1, characterised in that the suction line system in the rotor (1) is constructed as an axial bore (16) into which radially directed bores (8) open, from the vacuum chamber (6).

13. A vacuum centrifuge according to Claim 1, characterised in that the motor cap (25) is connected so as to be resistant to rotation with a shaft (29) which is constructed as a hollow shaft which opens into the axial bore (8).

14. A vacuum centrifuge according to Claim 1, characterised in that the rotor (1) is provided on its peripheral surface at least in the region between the radial guides (9) and the axial guides (12) with materials which have a high coefficient of thermal radiation.

## Revendications

1. Centrifugeuse à vide comprenant :
- une chambre à vide (6) qui est pourvue d'un couvercle (2) et d'une partie inférieure et qui est reliée par un système de conduites d'aspiration à un dispositif de pompe à vide (24) destiné à générer dans la chambre à vide (6) un vide souhaité ;
- un rotor (1) qui est apte à tourner autour de son axe central et qui porte plusieurs récipients à essais (7) ouverts en direction de la chambre à vide ;
- un moteur qui fait tourner le rotor (1) avec les récipients à essais ; et
- un boîtier stationnaire (27) sur lequel sont montés le moteur et le rotor et auquel est fixé un chauffage,
caractérisée en ce que la chambre à vide (6) est disposée dans le rotor (1) et est reliée au dispositif de pompe à vide (23 ; 24) à l'aide d'un système d'évacuation (16 ; 21, 22) prévu coaxialement par rapport à l'axe de rotor.

2. Centrifugeuse à vide selon la revendication 1, caractérisée en ce que le rotor (1) forme la partie inférieure de la chambre à vide (6) et un couvercle (2) est fixé hermétiquement au rotor (1) pour former avec lui la chambre à vide (6) située à l'intérieur.

3. Centrifugeuse à vide selon la revendication 2, caractérisée en ce que le couvercle (2) est fixé au rotor (1) à l'aide d'une liaison par vissage centrée.

4. Centrifugeuse à vide selon la revendication 1, caractérisée en ce que le rotor (1) est accouplé de façon amovible et solidaire en rotation, mécaniquement, à la cloche de moteur (25).

5. Centrifugeuse à vide selon la revendication 4, caractérisée en ce que l'axe de rotation du rotor (1) et l'axe de rotation de la cloche de moteur (25) sont disposés coaxialement l'un derrière l'autre.

6. Centrifugeuse à vide selon la revendication 4, caractérisée en ce que le rotor (1) et la cloche de moteur (25) sont accouplés à l'aide d'une liaison par vissage.

7. Centrifugeuse à vide selon la revendication 1, caractérisée en ce que le rotor (1) comporte pour les récipients à essais (7) des dispositifs de logement qui comprennent des guidages radiaux (9) et des guidages axiaux (12).

8. Centrifugeuse à vide selon la revendication 7, caractérisée en ce que les guidages radiaux (9) et les guidages axiaux (12) sont disposés avec un écartement qui est inférieur à la longueur des récipients à essais (7).

9. Centrifugeuse à vide selon la revendication 8, caractérisée en ce que les guidages radiaux (9) ont la forme d'ouvertures de passage dans lesquelles les récipients à essais (7) peuvent être placés vers l'extérieur, à partir de la chambre à vide (6), ces ouvertures de passage comportant des moyens d'étanchéité (10) qui les rendent étanches au vide par rapport aux parois extérieures des récipients à essais.

10. Centrifugeuse à vide selon la revendication 9, caractérisée en ce que les moyens d'étanchéité (10) comprennent une douille (9) et une bague d'étanchéité (10).

11. Centrifugeuse à vide selon la revendication 7, caractérisée en ce que les guidages axiaux sont conçus comme une rainure annulaire (12) qui comprend une surface d'appui (13) pour les récipients à essais (7).

12. Centrifugeuse à vide selon la revendication 1, caractérisée en ce que le système de conduites d'aspiration prévu est conçu dans le rotor (1) comme un perçage axial (16) dans lequel des perçages (8) dirigés radialement débouchent à partir de la chambre à vide (6).

13. Centrifugeuse à vide selon la revendication 1, caractérisée en ce que la cloche de moteur (25) est reliée, solidaire en rotation, à un arbre (29) conçu comme un arbre creux qui débouche dans le perçage axial (8).

14. Centrifugeuse à vide selon la revendication 1, caractérisée en ce qu'il est prévu, sur la surface périphérique du rotor (1) et au moins dans la zone située entre les guidages radiaux (9) et les guidages axiaux (12), des matériaux qui présentent un coefficient de rayonnement thermique élevé.
